(19) Europäisches Patentamt

European Patent Office

Office européen des brevets

(11) Veröffentlichungsnummer: **0 279 056 B1**

(12) **EUROPÄISCHE PATENTSCHRIFT**

(45) Veröffentlichungstag der Patentschrift: **26.02.92**

(51) Int. Cl.⁵: **A01G 31/00**, C05G 3/00

(21) Anmeldenummer: **87118463.6**

(22) Anmeldetag: **12.12.87**

Teilanmeldung 91100105.5 eingereicht am 12/12/87.

(54) **Verwendung eins Pflanzensubstrates.**

(30) Priorität: **19.02.87 DE 3705204**

(43) Veröffentlichungstag der Anmeldung:
**24.08.88 Patentblatt 88/34**

(45) Bekanntmachung des Hinweises auf die Patenterteilung:
**26.02.92 Patentblatt 92/09**

(84) Benannte Vertragsstaaten:
**AT BE CH DE ES FR GB GR IT LI NL SE**

(56) Entgegenhaltungen:
**AT-B- 358 311**
**DE-A- 2 022 419**
**DE-A- 2 648 119**
**DE-C- 3 414 965**
**US-A- 3 993 498**

(73) Patentinhaber: **Effem GmbH**
**Eitzer Landstrasse**
**W-2810 Verden/Aller(DE)**

(72) Erfinder: **Lang, Rüdiger**
**Buhnstrasse 76**
**W-4973 Vlotho(DE)**
Erfinder: **Tönne, Jürgen, Dr.**
**55, Rue de Vienne**
**F-45590 St Cyr En Val(FR)**
Erfinder: **Czempik, Klaus, Dr.**
**Kornblumenweg 4**
**W-2810 Verden/Aller(DE)**

(74) Vertreter: **Goddar, Heinz J., Dr. et al**
**FORRESTER & BOEHMERT Widenmayerstrasse 4/I**
**W-8000 München 22(DE)**

## Beschreibung

Die Erfindung betrifft eine neuartige Verwendung eines Pflanzengranulates gemäß dem Oberbegriff von Patentanspruch 1;

Der pflanzliche Stoffwechsel ist im wesentlichen durch folgende Vorgänge charakterisiert: Dissimilation (Atmung), Assimilation (Photosynthese), Nährstoffwechsel, Wasserhaushalt und Transpiration. Für ein optimales Wachstum benötigt die Pflanze, abgesehen von atmosphärischen Einflüssen (Klima, Licht usw.) einen festen Halt und eine kontinuierliche und ausreichende Nährstoff-und Wasserversorgung aus ihrem Substrat. Zusammensetzung und Aufbau des Substrates sind also wesentliche Wachstumsfaktoren.

Pflanzliche Organismen benötigen Wasser nicht nur als Ausgangsverbindung für die Photosynthese, sondern auch als wichtigen Reaktionspartner in Stoffwechselprozessen. Entsprechend hoch ist der Wassergehalt der Organismen: Der Massenanteil an Wasser kann bei höheren Pflanzen bis zu 90 % und mehr der lebenden Substanz betragen. In den Pflanzen findet ein ständiger Wasserfluß statt, der durch permanente Verdunstung (Transpiration) in den oberen Teilen der Pflanze angetrieben wird. Dieser Wasserverlust muß durch entsprechende Wasseraufnahme ausgeglichen werden. Pflanzliche Organismen können für die Wasseraufnahme gundsätzlich die gesamte Oberfläche nutzen. Pflanzen, die eine Wurzel besitzen, versorgen sich jedoch aus dem Substrat.

Die Nährstoffaufnahme ist zu einem großen Teil an Wasser gebunden, weil die Mineralstoffe und zum Teil auch die organischen Stoffe in wässriger Lösung aufgenommen werden. Neben Kohlenstoff, Sauerstoff und Wasserstoff, welche bei der Photosynthese ausgehend von $CO_2$ und $H_2O$ in organische Moleküle eingebaut werden, benötigen die Pflanzen für ihren Stoffwechsel weitere Elemente: Stickstoff, Schwefel und Phosphor als Nichtmetalle, sowie die Metalle Kalium, Calcium und Magnesium. Außerdem brauchen die meisten Pflanzen zur normalen Entwicklung noch Spurenelemente: Eisen, Mangan, Zink, Kupfer, Bor, Molybdän, Kobalt, sowie Chlor und Silizium, in einigen Fällen auch Natrium und Selen. Die genannten Elemente werden fast alle als essentiell betrachtet; bei unzureichendem Angebot kommt es zu typischen Ausfall-oder Mangelerscheinungen. Für viele Pflanzen ist das Vorhandensein aller essentiellen Elemente im Boden nicht ausreichen. Vielmehr müssen sich ihre Mengen zusätzlich in günstigem Verhältnis zueinander befinden. Darüber hinaus ist die Bindungsform der Nährstoffe an das Substrat und damit deren Verfügbarkeit eine kritische Größe für die Pflanzenversorgung.

Das Wohlergehen der Pflanze ist also in hohem Maße von physikalischen und chemischen Substrateigenschaften abhängig. Wichtige physikalische Parameter sind dabei das Bodenvolumen, die von der mineralogischen Zusammensetzung abhängige Austauschkapazität des Substrates, dessen Körnung und Gefüge, sowie die durch verschiedene Faktoren beeinflußte Stabilität des Substratgefüges. Die Gehalte an organischen Substanzen, wie Wuchs-, Humin-, Hemm-, Resistenzstoffen usw., und an den bereits oben erwähnten essentiellen Elementen aus anorganischen Substanzen stellen die entscheidenden chemischen Parameter des Substrates dar.

Früher wurden als Pflanzensubstrate zahlreiche unterschiedliche Erdgemische verwendet, um den unterschiedlichen Ansprüchen verschiedener Pflanzen gerecht zu werden. In den letzten Jahrzehnten bedient man sich in der Praxis einiger Standarderden und Torfsubstrate, deren Wasser und Nährstoffhaustahlt gut kontrolliert werden kann. Darüber hinaus wird insbesondere bei der Zimmerpflanzenhaltung in letzter Zeit vermehrt die Hydrokulturtechnik eingesetzt, bei der dem meist aus Blähtongranulat bestehenden Substrat die Nährstoffe in pflanzenverfügbarer Form über Gießlösungen zugeführt werden müssen. Das Substrat wird dabei durch Brennen geeigneter Tone bei sehr hohen Temperaturen hergestellt, wobei es durch innere Gasentwicklung zu einem Aufblähen des Materials kommt, d.h. zu einer unregelmäßigen Blasen- und Porenbildung. Ein derartiges Pflanzensubstrat auf der Basis eines Blähtongranulats ist beispielsweise aus der AT-B-359 311 bekannt.

Der Erfindung liegt daher die Aufgabe zugrunde, die Verwendung eines Pflanzensubstrates als Depot-Träger für Wirkstoffe vorzuschlagen, bei der eine verzögerte und kontrollierte Wirkstoffabgabe über einen vorgegebenen Zeitraum ermöglicht wird, wobei das verwendete Pflanzensubstrat gleichzeitig aber einfach und kostengünstig hergestellt werden kann.

Erfindungsgemäß wird diese Aufgabe durch die im Kennzeichen von Patentanspruch 1 aufgeführten Merkmale gelöst.

Bevorzugte Ausführungsformen der Erfindung ergeben sich aus den Unteransprüchen.

Die Erfindung liegt die überraschende Erkenntnis zugrunde, daß es gelingt, in optimaler Weise das Pflanzensubstrat als Wirkstoffträger einsetzbar zu machen, indem auf das Granulat ein Überzug aufgebracht wird, der erst unter dem Einfluß von Wurzelsäften oder Wasser innerhalb vorgebbarer Zeiträume in Lösung geht, so daß also beim Eindringen des Pflanzensubstrates in den Boden zunächst die Wirkstoffe in den Boden eindringen, während dann zu einem späteren Zeitpunkt, nach Lösen des Überzuges, das Pflanzensubstrat seine bodenlockernde Kapillar-Wirkung erzielt. Das erfindungsgemäß verwendete Granulat ist dabei nach einem Verfahren herstellbar, wie es, abgesehen von dem Aufbringen des Wirkstoffüberzuges in wesentlichen Zügen in der DE-PS 34 14 965 beschrieben ist, auf die zur weiteren Erläuterung des Herstellungsverfahrens verwiesen wird. Besonders vorteilhaft eignet sich die Lehre der Erfindung bei der Anwendung auf ein Pflanzensubstrat, wie es nach der EP-A 0 279 056 hergestellt werden kann, auf die insoweit zur zusätzlichen Erläuterung ebenfalls verwiesen wird.

Nachstehend ist die Erfindung anhand eines Ausführungsbeispieles erläutert.

Beispiel:

500 kg Ziegelton werden mit 200 l Wasser und 400 kg Kieselgur sowie 80 g Natriumpolyphosphat und 100 g Natriumdodecylsulfonat sowie 5 kg rückgeführten Schaumtonfeinteilen in einen Mischer gegeben, etwa 5 Minuten bei ca. 2 bar stark gerührt und die entstehende, hoch thixotrope Tonsuspension in eine Formanlage geführt und in Strängen mit 1 cm Durchmesser in einen Trommeltrockner gebracht. Der Trommeltrockner, der auf 200°C vorgeheizt war, leitet das Schaumtonmaterial nach einer Trockenzeit von 5 Minuten in einen Walzenbrecher. Im Walzenbrecher wird das getrocknete Schaumtonmaterial gebrochen; die zerkleinerten Schaumtonpartikel werden anschließend in einer Siebanlage in eine Kornfraktion mit Größen zwischen 2,5 und 4 mm, die zum Brennofen weitergeleitet wird, und eine Kornfraktion, die Korngrößen unterhalb von 2,5 mm aufweist, die zur Ausgangsmischung zurückgeführt wird, aufgetrennt. Die zum Brennen geführten getrockneten Schaumtonteilchen werden in einen kontinuierlich arbeitenden, auf 1450°C beheizten Ofen geführt und dort bei einer Verweilzeit von 4 Minuten gebrannt. Das gebrannte Keramikprodukt wird zu einem Granulat verarbeitet, welches unmittelbar als Pflanzensubstrat verwendbar ist. Dabei beträgt der pH-Wert 7,2, das Wasseraufnahmevermögen ca. 130 Gew.-%, die innere Oberfläche ca. 180 $m^2$/g und der Porendurchmesser 0,8 mm.

Erfindungsgemäß wird das Granulat vor der Verwendung als Pflanzensubstrat noch mit einer Wirkstofflösung auf Wasserglasbasis überzogen, die z.B. Dünger enthält, wobei der Überzug sich unter dem Einfluß von Wasser bzw. der Wurzelsäfte auflöst.

**Patentansprüche**

1. Verwendung eines Pflanzensubstrates mit einem Gehalt von 20 bis 100% an einem Granulat aus aufgeschäumten Tonen oder einem schwach gebrannten Keramikmaterial als Depot-Träger für Wirkstoffe in Form von Nährstoffen, Düngestoffen und/oder Pestiziden, wobei das Keramikmaterial mit einer entsprechenden Wirkstofflösung behandelt wird, dadurch gekennzeichnet, daß das Keramikmaterial nach der Behandlung mit der Wirkstofflösung mit einer Lösung überzogen wird, die zunächst erhärtet, sich aber unter Einwirkung von Wasser und/oder Wurzelsäften innerhalb eines vorgegebenen Zeitraums auflöst, wobei hierfür eine Lösung von Wasserglas verwendet wird, das zuvor mit Kalk, Kreide oder Gips in Reaktion gebracht worden ist.

2. Verwendung nach Anspruch 1, dadurch gekennzeichnet, daß das Granulat hinsichtlich der Korngröße im Bereich von 1 bis 5 mm Granulatdurchmesser liegt.

3. Verwendung nach Anspruch 2, dadurch gekennzeichnet, daß das Granulat hinsichtlich der Korngröße folgende Zusammensetzung aufweist: 15 bis 30 Gew.-%, vorzugsweise 25 Gew.-%, Granulat mit einem Durchmesser von 1 bis 2 mm; 40 bis 70 Gew.-%, vorzugsweise 60 Gew.-%, Granulat mit einem Durchmesser von 2 bis 4 mm; und 5 bis 20 Gew.-%, vorzugsweise 15 Gew.-%, Granulat mit einem Durchmesser von 4 bis 5 mm.

4. Verwendung nach einem der Ansprüche 1 bis 3, dadurch gekennzeichnet, daß die Porendurchmesser des Granulates kleiner als 1 mm sind.

**Claims**

1. Use of a plant substrate containing 20 to 100 % of granules of foamed clays or a ceramic material, fired at a low temperature, as a slow-release carrier for active substances in the form of nutrients, fertilisers and/or pesticides, where the ceramic material is treated with a suitable active substance solution, characterised in that the ceramic material is treated with the active substance solution and then coated with a solution which first hardens but then dissolves within a predetermined period under the influence of water and/or root excretions, a solution of water glass being used for this purpose which has previously been reacted with lime, chalk or gypsum.

2. Use according to Claim 1, characterised in that, with a view to particle size, the granules are in a range from 1 to 5 mm granule diameter.

**3.** Use according to Claim 2, characterised in that, with a view to particle size, the granules have the following composition: 15 to 30 % by weight, preferably 25 % by weight, of granules of diameter 1 to 2 mm; 40 to 70 % by weight, preferably 60 % by weight, of granules of diameter 2 to 4 mm; and 5 to 20 % by weight, preferably 15 % by weight, of granules of diameter 4 to 5 mm.

**4.** Use according to one of Claims 1 to 3, characterised in that the pore diameters of the granules are less than 1 mm.

**Revendications**

**1.** Application d'un substrat végétal ayant une teneur de 20 à 100 pour cent d'un granulé constitué d'argiles expansées ou d'une matière céramique ayant subi une combustion légère comme dépôt-support pour matières actives sous forme d'agents nutritifs, d'engrais et/ou de pesticides, où la matière céramique est traitée avec une solution de matière active correspondante, caractérisée en ce que la matière de céramique est recouverte après le traitement par la solution de matière active avec une solution qui durcit tout d'abord, mais qui se dissout sous l'action de l'eau et/ou des sucs de racine dans un intervalle de temps prédéterminé, où l'on utilise à cet effet une solution de silicate de sodium qui a été auparavant mise à réagir avec de la chaux, de la craie ou du gypse.

**2.** Application selon la revendication 1, caractérisée en ce que le granulé se situe du point de vue de la granulométrie dans un intervalle de 1 à 5 mm de diamètre de granulé.

**3.** Application selon la revendication 2, caractérisée en ce que le granulé, du point de vue de sa granulométrie, présente la composition suivante : 15 à 30 pour cent en poids, de préférence 25 pour cent en poids, de granulé d'un diamètre de 1 à 2 mm; 40 à 70 pour cent en poids, de préférence 60 pour cent en poids, de granulé ayant un diamètre de 2 à 4 mm; et 5 à 20 pour cent en poids, de préférence 15 pour cent en poids, de granulé ayant un diamètre de 4 à 5 mm.

**4.** Application selon l'une des revendications 1 à 3, caractérisée en ce que le diamètre des pores du granulé est inférieur à 1 mm.